# EUROPÄISCHE PATENTSCHRIFT

(11) **EP 2 461 001 B1**
(45) Veröffentlichungstag und Bekanntmachung des Hinweises auf die Patenterteilung: **21.10.2015**
(21) Anmeldenummer: 11189886.2
(22) Anmeldetag: 21.11.2011
(51) Int. Cl.: F01N 13/18, F01N 3/28, B60K 13/04, B23K 33/00, B23K 9/00, B23K 11/00

(54) **Fahrzeugbauteil**
Vehicle component
Composant de véhicule

(30) Priorität: 02.12.2010 DE 102010062335
(43) Veröffentlichungstag der Anmeldung: 06.06.2012
(73) Patentinhaber: Eberspächer Exhaust Technology GmbH & Co. KG, 66539 Neunkirchen (DE)
(72) Erfinder: Spieth, Arnulf, 73269 Hochdorf (DE)
(74) Vertreter: BRP Renaud & Partner mbB Rechtsanwälte Patentanwälte Steuerberater

(56) Entgegenhaltungen:
- EP-A1- 0 795 683
- DE-A1- 2 852 225
- JP-A- 2003 293 762
- US-A- 4 589 516
- US-B1- 6 660 235

## Beschreibung

Die vorliegende Erfindung betrifft ein Bauteil für ein Kraftfahrzeug, insbesondere einer Abgasanlage, das mittels wenigstens einer Halterung an einem Träger des Kraftfahrzeugs befestigbar ist, mit den Merkmalen des Oberbegriffs des Anspruchs 1.

An Kraftfahrzeugen, insbesondere an Nutzfahrzeugen, können an einem Träger, wie z.B. ein Tragrahmen, ein Getriebe, ein Motorblock, unterschiedliche Bauteile befestigt werden, wie zum Beispiel ein Kraftstofftank oder eine Komponente einer Abgasanlage, bei der es sich beispielsweise um einen Schalldämpfer und/oder um eine Abgasbehandlungseinrichtung handeln kann, die insbesondere mit einem Katalysator und/oder mit einem Partikelfilter und/oder mit einer SCR-Anlage arbeiten kann.

Üblicherweise weist ein derartiges Bauteil ein Bauteilgehäuse auf, das eine Gehäusewand besitzt. Um nun das Bauteil am Träger befestigen zu können, ist zumindest eine Halterung vorgesehen, die bauteilseitig zumindest einen Halter aufweist. Der jeweilige Halter weist einen sich parallel zur Gehäusewand erstreckenden Innenschenkel und einen von der Gehäusewand nach außen abstehenden Außenschenkel auf. Insbesondere kann der jeweilige Halter im Profil L-förmig oder T-förmig ausgestaltet sein.

Grundsätzlich ist es möglich, den Innenschenkel außen an der Gehäusewand anzuschweißen, zum Beispiel durch Schweißpunkte und/oder Schweißnähte. Es hat sich jedoch gezeigt, dass die jeweilige Halterung im Fahrzeugbetrieb sehr hohen mechanischen Belastungen ausgesetzt ist. Zum einen kann das jeweilige, über die jeweilige Halterung am Träger befestigte Bauteil ein vergleichsweise hohes Gewicht aufweisen. Zum anderen kann es während des Fahrbetriebs zu vergleichsweise starken Erschütterungen oder Schwingungen kommen, insbesondere im Off-Road-Betrieb. Diese hohen mechanischen Belastungen der jeweiligen Halterung können dazu führen, dass sich in der Schweißverbindung zwischen Innenschenkel und Gehäusewand oder sogar in der Gehäusewand selbst Risse ausbilden können, die zu einer Schwächung der jeweiligen Halterung und letztlich zu einem Versagen der jeweiligen Halterung führen können:

Ein gattungsgemäßes Bauteil ist z.B. aus der DE 28 52 225 A1 bekannt. Dieses Bauteil wird dabei mittels wenigstens einer Halterung an einem Träger eines Kraftfahrzeugs befestigt. Das Bauteil besitzt hierzu ein Bauteilgehäuse, das eine Gehäusewand aufweist, wobei die jeweilige Halterung zumindest einen Halter aufweist, der einen sich parallel zur Gehäusewand erstreckenden Innenschenkel und einen von der Gehäusewand nach außen abstehenden Außenschenkel aufweist, wobei die Gehäusewand eine Durchtrittsöffnung aufweist, durch welche der Außenschenkel hindurchragt, während der Innenschenkel im Inneren des Bauteilgehäuses an der Gehäusewand flächig anliegt.

Ein weiteres Bauteil ist z.B. aus der US 4,589,516 bekannt.

Die vorliegende Erfindung beschäftigt sich mit dem Problem, für ein Bauteil der eingangs genannten Art bzw. für die zugehörige Halterung eine verbesserte Ausführungsform anzugeben, die sich insbesondere dadurch auszeichnet, dass sie eine vergleichsweise große Dauerhaltbarkeit aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Innenschenkel im Inneren des Bauteilgehäuses an der Gehäusewand flächig zur Anlage zu bringen. Hierzu wird die Gehäusewand mit einer Durchtrittsöffnung ausgestattet, durch die hindurch der Außenschenkel nach außen absteht. Durch die flächige Kontaktierung des Innenschenkels mit der Innenseite der Gehäusewand wird eine flächige Abstützung zur Kraftübertragung zwischen Innenschenkel und Gehäusewand erreicht, welche die Belastung einer gegebenenfalls zwischen Innenschenkel und Gehäusewand vorgesehenen Schweißverbindung entsprechend reduziert. Hierdurch kann die Gefahr einer Rissbildung im Bereich der Schweißverbindung signifikant reduziert werden. Die Erfindung nutzt hierbei die Erkenntnis, die Kraftübertragung innerhalb der jeweiligen Halterung nicht ausschließlich über die jeweilige Schweißverbindung, sondern zu einem wesentlichen Anteil über eine flächige Abstützung des Innenschenkels an der Innenseite der Gehäusewand zu erzielen. Insbesondere kann der jeweilige Halter im Profil L-förmig oder T-förmig ausgestaltet sein.

Erfindungsgemäß weist die jeweilige Halterung eine Abdeckung auf, die im Inneren des Bauteilgehäuses die Durchtrittsöffnung und den jeweiligen Innenschenkel überbrückt und an der Gehäusewand befestigt ist. Mit Hilfe dieser Abdeckung können Spannungen im Bereich der Durchtrittsöffnung, die durch die Abstützung des Innenschenkels an der Gehäusewand entstehen können, reduziert werden, wodurch die Gefahr einer Rissbildung in der Gehäusewand an einem die Durchtrittsöffnung einfassenden Rand reduziert ist.

Besonders vorteilhaft ist es, die Abdeckung so auszugestalten und/oder an der Gehäusewand zu befestigen, dass sie die Durchtrittsöffnung von innen dicht verschließt. Insbesondere für den Fall, dass es sich beim jeweiligen Bauteil um eine Komponente einer Abgasanlage oder um einen Kraftstofftank handelt, ist es erwünscht, den Innenraum gegenüber der Umgebung zu versiegeln. Dies kann im Bereich der Durchtrittsöffnung mit Hilfe der jeweiligen Abdeckung realisiert werden.

Bei einer anderen Ausführungsform kann vorgesehen sein, den jeweiligen Innenschenkel nur an der Abdeckung zu befestigen, so dass er nur indirekt, nämlich über die Abdeckung an der Gehäusewand befestigt ist. Eine Befestigung des Innenschenkels an der Gehäusewand ist dann entbehrlich. Somit stützt sich der Innenschenkel an der Gehäusewand bei dieser Ausführungsform direkt nur über Formschluss ab.

Bei einer alternativen Ausführungsform können der jeweilige Innenschenkel und die Abdeckung gemeinsam an der Gehäusewand befestigt sein, beispielsweise mittels wenigstens einer gemeinsamen Schweißnaht, die dann als sogenannte Drei-Blech-Naht ausgeführt sein kann, da sie gleichzeitig drei Blechkörper miteinander verbindet. Grundsätzlich ist noch eine weitere Alternative denkbar, bei welcher der Innenschenkel und die Abdeckung jeweils für sich, insbesondere mittels separater Schweißverbindungen, an der Gehäusewand befestigt sind.

Gemäß einer anderen Ausführungsform kann die Abdeckung flächig am jeweiligen Innenschenkel anliegen. Hierdurch wird zusätzlich eine flächige Abstützung des Innenschenkels an der Abdeckung realisiert, was die Kraftübertragung verbessert und die Belastung der beteiligten Schweißnähte reduziert.

Entsprechend einer vorteilhaften Ausführungsform kann die Gehäusewand angrenzend an die Durchtrittsöffnung für den jeweiligen Innenschenkel eine nach außen vorstehende Ausbuchtung aufweisen. In besagter Ausbuchtung kommt dann der jeweilige Innenschenkel flächig an der Gehäusewand zur Anlage. Hierdurch ergibt sich für den Innenschenkel im Inneren des Bauteilgehäuses eine versenkte Anordnung, wodurch insbesondere eine Störkontur im Inneren des Gehäuses vermieden werden kann. Ferner vereinfacht sich hierdurch die Formgebung für die gegebenenfalls vorgesehene Abdeckung. Besonders zweckmäßig kann dabei vorgesehen sein, eine Tiefe der Ausbuchtung so zu wählen, dass sie im Wesentlichen einer Dicke des jeweiligen Innenschenkels entspricht. Hierdurch lässt sich der Innenschenkel in der Ausbuchtung bündig zur Innenseite der Gehäusewand versenken.

Bei einer anderen Ausführungsform kann die jeweilige Halterung zusätzlich zum jeweiligen Halter ein Verstärkungselement aufweisen, das einen parallel zum Au-βenschenkel des jeweiligen Halters verlaufenden und daran flächig anliegenden Stützschenkel und einen parallel zum Innenschenkel des jeweiligen Halters verlaufenden und außen an der Gehäusewand flächig anliegenden Klemmschenkel aufweist. Vorzugsweise ist das jeweilige Verstärkungselement im Profil L-förmig ausgestaltet. Ferner ist eine Lagefixierung des jeweiligen Verstärkungselements relativ zum jeweiligen Halter vorgesehen. Beispielsweise können Verstärkungselement und Halter aneinander befestigt sein, beispielsweise mittels einer Verschweißung bzw. einer Verschraubung. Über das Verstärkungselement erfolgt nun auch eine flächige Kraftübertragung zwischen Klemmschenkel und Gehäusewand, was zu einer weiteren Entlastung der gegebenenfalls vorhandenen Schweißverbindungen führt.

Besonders vorteilhaft ist eine Ausführungsform, bei welcher die jeweilige Halterung zwei derartige Halter aufweist, deren Innenschenkel entgegengesetzt von den flächig aneinander anliegenden Außenschenkeln abstehen. Ferner können die Außenschenkel zweckmäßig aneinander befestigt sein, beispielsweise miteinander verschweißt sein. Durch die beiden Halter lassen sich die Schweißverbindungen in zwei entgegengesetzten Kraftwirkrichtungen entlasten, da in beiden Kraftwirkrichtungen einer der Innenschenkel flächig an der Innenseite der Gehäusewand abgestützt ist und dadurch eine die Schweißverbindungen entlastende Kraftübertragung ermöglicht.

Besonders zweckmäßig ist eine Weiterbildung, bei welcher die jeweilige Halterung außerdem zwei derartige Verstärkungselemente aufweist, deren Klemmschenkel entgegengesetzt von den Stützschenkeln abstehen. Somit wird auch im Bereich der Verstärkungselemente eine Verdoppelung der Kraftübertragung und somit der Entlastung der Schweißverbindungen realisiert. Besonders zweckmäßig kann dabei vorgesehen sein, dass die beiden Verstärkungselemente einen Verstärkungsschuh bilden, der als einheitliches Bauteil bzw. als Einheit auf die beiden Außenschenkel der Halter aufsteckbar ist. Grundsätzlich ist auch hier eine alternative Ausführungsform denkbar, bei der zwar zwei Verstärkungselemente vorgesehen sind, jedoch nur ein einziger Halter vorgesehen ist. Insbesondere können dann die beiden Verstärkungselemente optional wieder einen Verstärkungsschuh bilden, der dann jedoch nur auf den einen Außenschenkel des einen Halters aufsteckbar ist.

Beim Bauteil, das mit Hilfe der hier vorgestellten Halterung am Fahrzeug befestigbar ist, kann es sich bevorzugt um eine Abgasbehandlungseinrichtung handeln, die zumindest ein Element aus der Gruppe Schalldämpfer, Katalysator, Partikelfilter, SCR-Anlage, Harnstoffeinspritzeinrichtung umfasst. Insoweit betrifft die vorliegende Erfindung auch eine Abgasbehandlungseinrichtung, die über wenigstens eine derartige Halterung an einem Kraftfahrzeug befestigt werden kann.

Ferner betrifft die vorliegende Erfindung die hier vorgestellte Halterung für sich genommen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

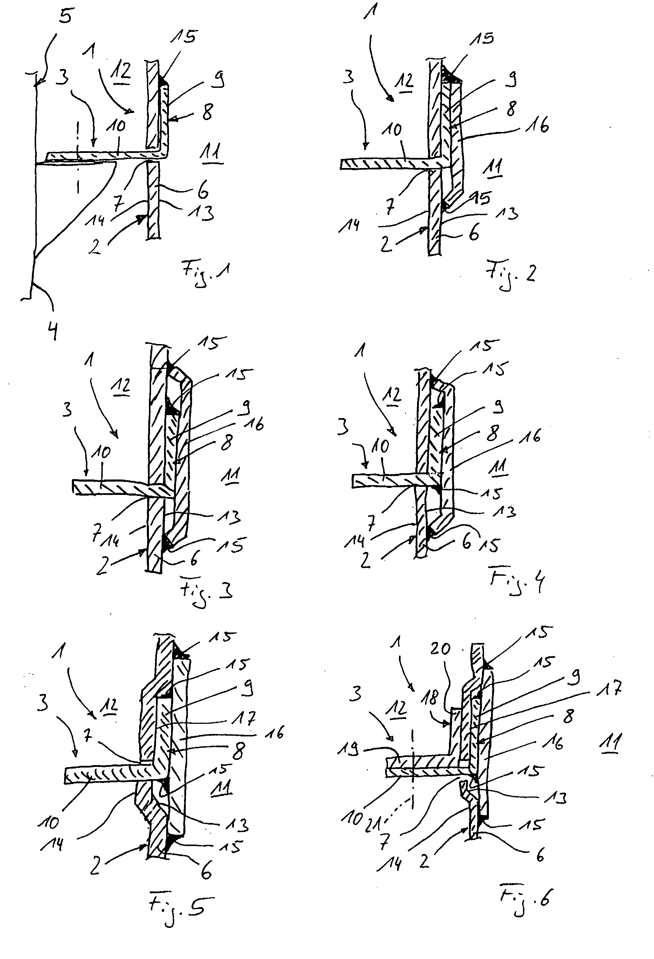

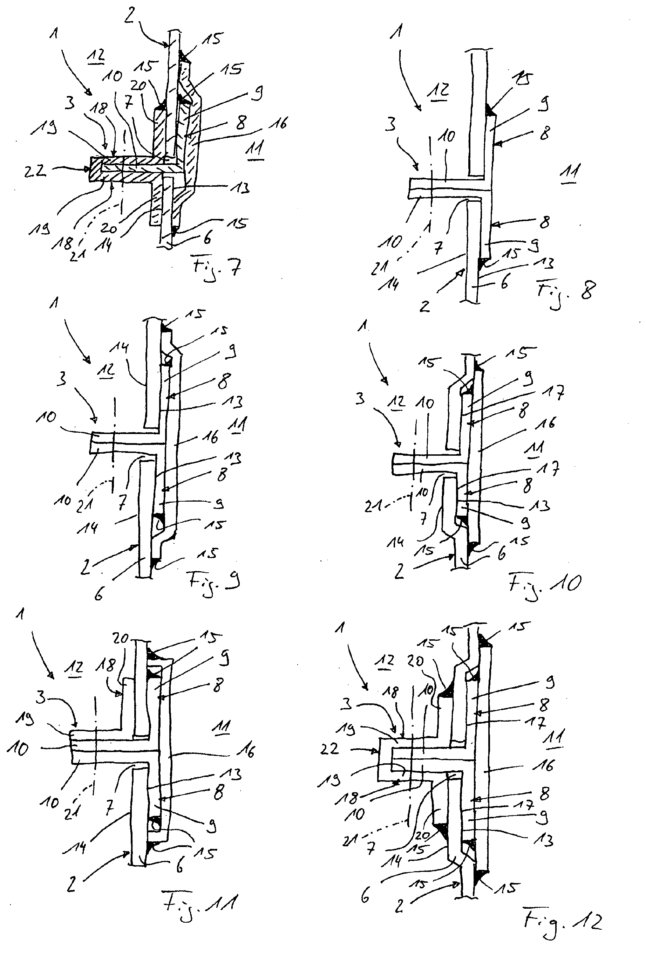

Es zeigen, jeweils schematisch
- Fig. 1-12: jeweils eine stark vereinfachte Schnittansicht eines Bauteils im Bereich einer Halterung, bei verschiedenen Ausführungsformen, wobei die Fig. 1 und 8 keine erfindungsgemäßen Ausführungsformen zeigen.

Entsprechend den Figuren 1-12 umfasst ein hier nur teilweise dargestelltes Bauteil 1 ein Bauteilgehäuse 2 und wenigstens eine Halterung 3, mit deren Hilfe das Bauteil 1 an einem Träger 4 eines im Übrigen nicht dargestellten Kraftfahrzeugs 5 befestigt werden kann. Beim Bauteil 1 handelt es sich bevorzugt um eine Abgasbehandlungseinrichtung, die einen Schalldämpfer oder einen Katalysator oder ein Partikelfilter oder eine SCR-Anlage mit einer Injektionseinrichtung für Ammoniak oder Harnstoff oder Harnstoff-Wasser-Lösung und mit einem SCR-Katalysator, oder die alle vorgenannten Komponenten oder eine beliebige Kombination der vorgenannten Komponenten umfasst. Beim Träger 4 handelt es sich beispielsweise um einen Tragrahmen des Fahrzeugs oder um ein Getriebe oder um einen Motorblock oder um eine sonstige zum Tragen des Bauteils 1 geeignete Komponente des Fahrzeugs.

Das Bauteilgehäuse 2 weist eine Gehäusewand 6 auf, die im Bereich der Halterung 3 eine Durchtrittsöffnung 7 besitzt. Die jeweilige Halterung 3 weist zumindest einen Halter 8 auf, der zumindest zwei etwa um 90° gegeneinander abgewinkelte Schenkel aufweist, nämlich einen Innenschenkel 9, der sich parallel zur Gehäusewand 6 erstreckt, und einen Außenschenkel 10, der von der Gehäusewand 6 nach außen absteht. In den gezeigten Beispielen ist der Halter 8 jeweils im Profil L-förmig ausgestaltet. Alternativ ist beispielsweise auch eine im Profil T-förmige Ausgestaltung möglich. Die Gehäusewand 6 trennt ein Inneres 11 des Gehäuses 2, also ein Gehäuseinneres 11 von einer Umgebung 12 des Gehäuses 2. Dementsprechend besitzt die Gehäusewand 6 eine dem Inneren 11 zugewandte Innenseite 13 und eine der Umgebung 12 zugewandte Außenseite 14.

Bei der hier vorgestellten Halterung 3 ist der jeweilige Halter 8 so montiert, dass sein Innenschenkel 9 im Gehäuseinneren 11 an der Gehäusewand 6, also an deren Innenseite 13 flächig anliegt, während der Außenschenkel 10 durch die Durchtrittsöffnung 7 hindurchragt. Im Beispiel der Figur 1 ist der Halter 8 im Bereich seines Innenschenkels 9, also im Gehäuseinneren 11 mit der Gehäusewand 6 verschweißt. Eine entsprechende Schweißnaht ist mit 15 bezeichnet.

Gemäß den Figuren 2-7 und 9-12 kann gemäß einer vorteilhaften Ausführungsform die jeweilige Halterung 3 außerdem eine Abdeckung 16 aufweisen, die im Inneren 11 angeordnet ist. Dabei überbrückt die Abdeckung 16 von innen die Durchtrittsöffnung 7 und den jeweiligen Innenschenkel 9. Ferner ist die Abdeckung 16 an der Gehäusewand 6, nämlich an deren Innenseite 13 befestigt. Bevorzugt ist die Abdeckung 16 mit der Gehäusewand 6 verschweißt. Entsprechende Schweißnähte sind wieder mit 15 bezeichnet. Die Abdeckung 16 ist zweckmäßig so dimensioniert, dass sie die Durchtrittsöffnung 7 und den jeweiligen Innenschenkel 9 allseits überdeckt. Ferner kann zumindest eine geschlossen umlaufende Schweißnaht 15 vorgesehen sein, welche die Abdeckung 16 mit der Gehäusewand 6 verbindet. Auf diese Weise kann die Durchtrittsöffnung 7 mit Hilfe der Abdeckung 16 von innen gasdicht verschlossen werden.

Bei der in Figur 2 gezeigten Ausführungsform sind der Innenschenkel 9 und die Abdeckung 16 über eine gemeinsame Schweißnaht 15 aneinander und an der Gehäusewand 6 befestigt. Diese Schweißnaht 15 bildet in diesem Fall eine sogenannte Drei-Blech-Naht.

Alternativ ist es gemäß Figur 3 auch möglich, den Innenschenkel 9 und die Abdeckung 16 unabhängig voneinander separat an der Gehäusewand 6 zu befestigen. Entsprechende Schweißstellen sind wieder mit 15 bezeichnet. Auch die Figuren 7 und 11 zeigen Ausführungsformen, bei denen der jeweilige Innenschenkel 9 und die Abdeckung 16 über separate Schweißstellen 15 an der Gehäusewand 6 befestigt sind.

Im Unterschied dazu zeigen die Figuren 4-6 und 9-12 Ausführungsformen, bei denen der jeweilige Innenschenkel 9 an der Abdeckung 16 befestigt ist, beispielsweise über Schweißverbindungen 15, während die Abdeckung 16 selbst an der Gehäusewand 6 befestigt ist, beispielsweise über Schweißstellen 15.

Zweckmäßig ist die jeweilige Abdeckung 16 so konzipiert, dass sie am jeweiligen Innenschenkel 9 flächig zur Anlage kommt. Im Bereich der Halterung 3 sind Gehäusewand 6, der jeweilige Innenschenkel 9 und die Abdeckung 16 zumindest in den Bereichen, in denen sie flächig aneinander anliegen, eben ausgestaltet.

Bei den Ausführungsformen der Figuren 5, 6, 10 und 12 weist die Gehäusewand 6 für den jeweiligen Innenschenkel 9 eine nach außen, also in Richtung der Umgebung 12 vorstehende Ausbuchtung 17 auf, die an die Durchtrittsöffnung 7 angrenzt. Die Ausbuchtung 17 ist dabei so dimensioniert, dass innerhalb der Ausbuchtung 17 der jeweilige Innenschenkel 9 flächig an der Gehäusewand 6 zur Anlage kommt. Insbesondere kann dabei eine parallel zum Außenschenkel 10 gemessene Tiefe der Ausbuchtung 17 im Wesentlichen einer Dicke des jeweiligen Innenschenkels 9 entsprechen. Hierdurch ist es möglich, den jeweiligen Innenschenkel 9 bündig zur Gehäusewand 6 in der Ausbuchtung 17 versenkt anzuordnen.

Gemäß den Ausführungsformen der Figuren 6, 7, 11 und 12 weist die jeweilige Halterung 3 als Option zusätzlich zum jeweiligen Halter 8 zumindest ein Verstärkungselement 18 auf, das ebenfalls zumindest zwei um 90° voneinander abstehende Schenkel aufweist, nämlich einen parallel zum Außenschenkel 10 des jeweiligen Halters 8 verlaufenden Stützschenkel 19 und einen parallel zum Innenschenkel 9 des jeweiligen Halters 8 verlaufenden Klemmschenkel 20. In den Beispielen ist das jeweilige Verstärkungselement 18 im Profil L-förmig ausgestaltet. Der jeweilige Stützschenkel 19 liegt am Außenschenkel 10 des zugeordneten Halters 8 flächig an. Der jeweilige Klemmschenkel 20 liegt dagegen außen an der Gehäusewand 6 flächig an, derart, dass der Klemmschenkel 20 und der Innenschenkel 9 des zugehörigen Halters 8 die Gehäusewand 6 sandwichartig zwischen sich aufnehmen und insbesondere zwischen sich einspannen. Das Verstärkungselement 18 und der zugehörige Halter 8 sind relativ zueinander lagefixiert, wobei eine entsprechende Lagefixierung durch eine strichpunktierte Linie angedeutet und mit 21 bezeichnet ist. Beispielsweise kann eine derartige Lagefixierung 21 mittels einer Verschraubung oder mittels einer Schweißverbindung realisiert werden. Insbesondere erfolgt die Lagefixierung 21 zwischen Verstärkungselement 18 und zugehörigem Halter 8 im Bereich der aneinander anliegenden Schenkel, also im Bereich des Außenschenkels 10 und des Stützschenkels 19. Beispielsweise ist der Außenschenkel 10 mit dem Stützschenkel 19 verschraubt oder verschweißt.

Bei der in Figur 7 gezeigten Ausführungsform sind zwei derartige Verstärkungselemente 18 vorgesehen, deren Stützschenkel 19 an voneinander abgewandten Seiten am selben Außenschenkel 10 des einen Halters 8 flächig anliegen. Die beiden Verstärkungselemente 18 können dabei separate Bauteile sein und insbesondere baugleich ausgestaltet sein. In Figur 7 ist jedoch eine besondere Ausführungsform gezeigt, bei der die beiden Verstärkungselemente 18 gemeinsam einen Verstärkungsschuh 22 bilden, der im Rahmen der Montage der Halterung 3 außen auf den Außenschenkel 10 aufsteckbar ist. Beispielsweise kann der Verstärkungsschuh 22 durch Zusammenschweißen der beiden Verstärkungselemente 18 gebildet werden. Ebenso kann der Verstärkungsschuh 22 ein integrales Blechformteil sein, das die beiden Verstärkungselemente 18 integral umfasst. Rein exemplarisch zeigt Figur 7 außerdem die Möglichkeit, zumindest eines der Verstärkungselemente 18, hier das obere, im Bereich des Klemmschenkels 20 mit der Gehäusewand 6 zu verbinden, beispielsweise mittels einer Schweißverbindung 15.

Bei den Ausführungsformen der Figuren 1-7 umfasst die jeweilige Halterung 3 nur einen einzigen Halter 8. Im Unterschied dazu zeigen die Figuren 8-12 Ausführungsformen, bei denen die jeweilige Halterung 3 zwei derartige Halter 8 aufweist, wobei die beiden Halter 8 innerhalb der jeweiligen Halterung 3 so angeordnet sind, dass ihre Innenschenkel 9 entgegengesetzt orientiert sind und dass ihre Außenschenkel 10 flächig aneinander anliegen. Somit stehen die Innenschenkel 9 entgegengesetzt von den Außenschenkeln 10 ab. Die aneinander anliegenden Außenschenkel 10 der beiden Halter 8 können relativ zueinander lagefixiert sein. Eine entsprechende Lagefixierung ist in den Figuren 8-12 ebenfalls durch eine strichpunktierte Linie angedeutet und mit 21 bezeichnet. Eine derartige Lagefixierung 21 kann beispielsweise durch eine Schweißverbindung oder eine Schraubverbindung realisiert sein. Anstelle der jeweils zwei im Profil L-förmigen Halter 8 kann auch ein einziger im Profil T-förmiger Halter verwendet werden, um die Ausführungsformen der Fig. 8 bis 12 zu realisieren.

Die in Figur 8 gezeigte einfache Ausführungsform der Halterung 3 unterscheidet sich von der in Figur 1 gezeigten Ausführungsform lediglich durch den zweiten Halter 8 und kommt insbesondere ohne Abdeckung 16 aus. Eine gewisse Abdichtung der Durchtrittsöffnung 7 kann bei dieser Ausführungsform beispielsweise durch eine geschlossen umlaufende Schweißnaht 15 realisiert werden, welche die Innenschenkel 9 der beiden Halter 8 an der Gehäusewand 6 festlegt.

Gemäß Figur 9 kann auch die mit zwei Haltern 9 ausgestattete Halterung 3 mit einer Abdeckung 16 versehen sein, die dementsprechend beide Innenschenkel 9 überbrückt. Hier erfolgt eine effektive Abdichtung der Durchtrittsöffnung 7 zweckmäßig über eine entsprechende Geometrie der Abdeckung 16 sowie eine entsprechende Befestigung der Abdeckung 16 an der Gehäusewand 6, insbesondere mittels einer umlaufenden Schweißnaht 15. Im Beispiel der Figur 9 sind die Innenschenkel 9 der beiden Halter 8 jeweils an der Abdeckung 16 befestigt. Abgesehen vom zweiten Halter 8 entspricht die in Figur 9 gezeigte Ausführungsform somit weitgehend der in Figur 4 gezeigten Ausführungsform.

Die in Figur 10 gezeigte Ausführungsform entspricht weitgehend der in Figur 9 gezeigten Ausführungsform, ist jedoch zusätzlich für den jeweiligen Innenschenkel 9 im Bereich der Durchtrittsöffnung 7 mit einer Ausbuchtung 17 versehen. Insoweit entspricht die in Figur 10 gezeigte Ausführungsform weitgehend der in Figur 5 gezeigten Ausführungsform und unterscheidet sich davon lediglich durch den zweiten Halter 8.

Bei der in Figur 11 gezeigten Ausführungsform ist die Halterung 3 wieder mit einem Verstärkungselement 18 ausgestattet, um die Abstützung der einen Halterung 8 an der Gehäusewand 6 zu verbessern. Insoweit entspricht die in Figur 11 gezeigte Ausführungsform weitgehend der in Figur 6 gezeigten Ausführungsform, besitzt jedoch zwei Halter 8. Auch hier ist eine Fixierung 21 zwischen dem Verstärkungselement 18 und dem zugehörigen Halter 8 vorgesehen. In diesem Fall ist eine integrierte Fixierung 21 vorgesehen, die einerseits die beiden Außenschenkel 10 aneinander und andererseits den Stützschenkel 19 am Außenschenkel des zugehörigen Halters 8 fixiert. Außerdem ist bei der in Figur 11 gezeigten Darstellung der obere Halter 8 exemplarisch an der Gehäusewand 6 fixiert, während der untere Halter 8 exemplarisch an der Abdeckung 16 fixiert ist. Die in Figur 11 gezeigte Ausführungsform entspricht weitgehend der in Figur 6 gezeigten Ausführungsform, unterscheidet sich von dieser insbesondere jedoch durch den zweiten Halter 8 und durch die fehlende Ausbuchtung 17.

Bei der in Figur 12 gezeigten Ausführungsform sind die Ausbuchtungen 17 gemäß der in Figur 10 gezeigten Ausführungsform vorgesehen. Ferner sind zwei Verstärkungselemente 18 vorgesehen, nämlich für jeden Halter 8 jeweils ein Verstärkungselement 18. Die beiden Verstärkungselemente 18 können zwei separate Bauteile sein, die insbesondere baugleich sind. In Figur 12 ist jedoch eine besondere Ausführungsform gezeigt, bei welcher die beiden Verstärkungselemente 18 einen Verstärkungsschuh 22 bilden, zu dem die beiden Verstärkungselemente 18 zusammengefasst sind. Dies kann beispielsweise über eine Schweißverbindung zwischen den beiden Verstärkungselementen 18 realisiert werden oder durch eine integrale Formgebung oder einteilige Herstellung des Verstärkungsschuhs 22. Der Verstärkungsschuh 22 kann zweckmäßig so dimensioniert sein, dass er für die Montage der Halterung 3 von außen auf die beiden Außenschenkel 10 der beiden Halter 8 aufgesteckt werden kann. Im Beispiel der Figur 12 sind die beiden Verstärkungselemente 18 außerdem im Bereich ihrer Klemmschenkel 20 mit der Gehäusewand 6 verschweißt. Entsprechende Schweißstellen sind wieder mit 15 bezeichnet.

Das jeweilige Verstärkungselement 18 kommt in den Ausführungsformen der Fig. 6, 7, 11 und 12 mit seinem Klemmschenkel 20 flächig an der Außenseite 14 der Gehäusewand 6 zur Anlage und führt zu einer Kraftabstützung und somit zu einer Entlastung der Schweißnähte 15.

## Patentansprüche

1. Bauteil für ein Kraftfahrzeug (5), insbesondere einer Abgasanlage, das mittels wenigstens einer Halterung (3) an einem Träger (4) des Kraftfahrzeugs (5) befestigbar ist,
- mit einem Bauteilgehäuse (2), das eine Gehäusewand (6) aufweist,
- wobei die jeweilige Halterung (3) zumindest einen Halter (8) aufweist, der einen sich parallel zur Gehäusewand (6) erstreckenden Innenschenkel (9) und einen von der Gehäusewand (6) nach außen abstehenden Außenschenkel (10) aufweist,
- wobei die Gehäusewand (6) eine Durchtrittsöffnung (7) aufweist, durch welche der Außenschenkel (10) hindurchragt, während der Innenschenkel (9) im Inneren (11) des Bauteilgehäuses (2) an der Gehäusewand (6) flächig anliegt, **dadurch gekennzeichnet,**
**dass** die jeweilige Halterung (3) eine Abdeckung (16) aufweist, die im Inneren (11) des Bauteilgehäuses (2) die Durchtrittsöffnung (7) und den jeweiligen Innenschenkel (9) überbrückt und an der Gehäusewand (6) befestigt ist.

2. Bauteil nach Anspruch 1,
**dadurch gekennzeichnet,**
**dass** die Abdeckung (16) die Durchtrittsöffnung (7) von innen dicht verschließt.

3. Bauteil nach Anspruch 1 oder 2,
**dadurch gekennzeichnet,**
- **dass** der jeweilige Innenschenkel (9) an der Abdeckung (16) befestigt ist und nur indirekt über die Abdeckung (16) an der Gehäusewand (6) befestigt ist, oder
- **dass** der jeweilige Innenschenkel (9) und die Abdeckung (16) gemeinsam an der Gehäusewand (6) befestigt sind.

4. Bauteil nach einem der Ansprüche 1 bis 3,
**dadurch gekennzeichnet,**
**dass** die Abdeckung (16) flächig am jeweiligen Innenschenkel (9) anliegt.

5. Bauteil nach einem der Ansprüche 1 bis 4,
**dadurch gekennzeichnet,**
**dass** die Gehäusewand (6) angrenzend an die Durchtrittsöffnung (7) für den jeweiligen Innenschenkel (9) eine nach außen vorstehende Ausbuchtung (17) aufweist, in der der jeweilige Innenschenkel (9) flächig an der Gehäusewand (6) anliegt, wobei insbesondere vorgesehen sein kann, dass eine Tiefe der Ausbuchtung (17) im Wesentlichen einer Dicke des jeweiligen Innenschenkels (9) entspricht.

6. Bauteil nach einem der Ansprüche 1 bis 5,
**dadurch gekennzeichnet,**
**dass** die jeweilige Halterung (3) zusätzlich zum jeweiligen Halter (8) zumindest ein Verstärkungselement (18) aufweist, das einen parallel zum Außenschenkel (10) des jeweiligen Halters (8) verlaufenden und daran flächig anliegenden Stützschenkel (19) und einen parallel zum Innenschenkel (9) des jeweiligen Halters (8) verlaufenden und außen an der Gehäusewand (6) flächig anliegenden Klemmschenkel (20) aufweist, wobei das jeweilige Verstärkungselement (18) und der jeweilige Halter (8) relativ zueinander lagefixiert sind.

7. Bauteil nach einem der Ansprüche 1 bis 6,
**dadurch gekennzeichnet,**
**dass** die jeweilige Halterung (3) zwei solche Halter (8) aufweist, deren Innenschenkel (9) entgegengesetzt von den flächig aneinander anliegenden Außenschenkeln (10) abstehen, wobei insbesondere vorgesehen sein kann, dass die Außenschenkel (10) der beiden Halter (8) aneinander befestigt sind.

8. Bauteil zumindest nach Anspruch 6,
**dadurch gekennzeichnet,**
**dass** die jeweilige Halterung (3) zwei solche Verstärkungselemente (18) aufweist, deren Klemmschenkel (20) entgegengesetzt von den Stützschenkeln (19) abstehen, wobei insbesondere vorgesehen sein kann, dass die beiden Verstärkungselemente (18) einen Verstärkungsschuh (22) bilden, der auf den Außenschenkel (10) des einen Halters (8) oder auf die beiden Außenschenkel (10) der beiden Halter (8) aufsteckbar ist.

9. Bauteil nach einem der Ansprüche 1 bis 8,
**dadurch gekennzeichnet,**
**dass** das Bauteil (1) eine Abgasbehandlungseinrichtung ist, die zumindest ein Element der folgenden Gruppe umfasst: Schalldämpfer, Katalysator, Partikelfilter, SCR-Anlage.

## Claims

1. Component for a motor vehicle (5), in particular of an exhaust system, which can be fastened to a carrier (4) of the motor vehicle (5) by means of at least one mount (3), the component comprising a component housing (2) having a housing wall (6), the respective mount (3) comprising at least one holder (8) which has an inner leg (9) extending in parallel with the housing wall (6) and an outer leg (10) protruding outwards from the housing wall (6), the housing wall (6) comprising a through-opening (7), through which the outer leg (10) protrudes, while the inner leg (9) bears in a planar manner against the housing wall (6) in the interior (11) of the component housing (2), **characterised in that** the respective mount (3) comprises a cover (16) which, in the interior (11) of the component housing (2), bridges the through-opening (7) and the respective inner leg (9) and is fastened to the housing wall (6).

2. Component according to claim 1, **characterised in that** the cover (16) tightly seals the through-opening (7) from the inside.

3. Component according to either claim 1 or claim 2, **characterised in that** the respective inner leg (9) is fastened to the cover (16) and is only indirectly fastened to the housing wall (6) via the cover (16), or **in that** the respective inner leg (9) and the cover (16) are both fastened to the housing wall (6).

4. Component according to any of claims 1 to 3, **characterised in that** the cover (16) bears in a planar manner against the respective inner leg (9).

5. Component according to any of claims 1 to 4, **characterised in that** the housing wall (6) adjoining the through-opening (7) comprises an outwardly protruding protrusion (17) for the respective inner leg (9), in which protrusion the respective inner leg (9) bears in a planar manner against the housing wall (6), it being preferably possible to provide in particular for a depth of the protrusion (17) to substantially correspond to a thickness of the respective inner leg (9).

6. Component according to any of claims 1 to 5, **characterised in that**, in addition to the respective holder (8), the respective mount (3) comprises at least one reinforcing element (18) which comprises a support leg (19), which extends in parallel with the outer leg (10) of the respective holder (8) and bears in a planar manner against said holder, and a clamping leg (20) which extends in parallel with the inner leg (9) of the respective holder (8) and bears in a planar manner against the outside of the housing wall (6), the respective reinforcing element (18) and the respective holder (8) being fixed in position relative to each other.

7. Component according to any of claims 1 to 6, **characterised in that** the respective mount (3) comprises two such holders (8), the inner legs (9) of which protrude in the opposite direction to the outer legs (10) which bear in a planar manner against each other, it being possible in particular to provide for the outer legs (10) of the two holders (8) to be fastened to each other.

8. Component at least according to claim 6, **characterised in that** the respective mount (3) comprises two such reinforcing elements (18), the clamping legs (20) of which protrude in the opposite direction to the support legs (19), it being possible to provide in particular for the two reinforcing elements (18) to form a reinforcing shoe (22), which can be fitted onto the outer leg (10) of one holder (8) or onto the two outer legs (10) of the two holders (8).

9. Component according to any of claims 1 to 8, **characterised in that** the component (1) is an exhaust gas treatment device comprising at least one element from the following group: silencer, catalytic converter, particle filter, SCR-system.

## Revendications

1. Composant pour un véhicule automobile (5), notamment d'une installation de gaz d'échappement, lequel peut être fixé à un support (4) du véhicule automobile (5) au moyen d'au moins une attache (3),
- avec un carter de composant (2), qui comporte une paroi de carter (6),
- l'attache (3) respective comportant au moins une agrafe (8) qui comporte une branche intérieure (9) s'étendant parallèlement à la paroi de carter (6) et une branche extérieure (10) s'écartant de la paroi de carter (6) vers l'extérieur,
- la paroi de carter (6) comportant un trou de passage (7) par lequel passe la branche extérieure (10) tandis que la branche intérieure (9) s'appuie par sa surface contre la paroi de carter (6) dans l'intérieur (11) du carter de composant (2),
**caractérisé en ce que** l'attache (3) respective comporte un cache (16) qui couvre le trou de passage (7) et la branche intérieure (9) respective dans l'intérieur (11) du carter de composant (2) et qui est fixé à la paroi de carter (6).

2. Composant selon la revendication 1, **caractérisé en ce que** le cache (16) ferme de l'intérieur le trou de passage (7) de manière étanche.

3. Composant selon la revendication 1 ou 2, **caractérisé en ce que**
- la branche intérieure (9) respective est fixée au cache (16) et est fixée seulement indirectement par l'intermédiaire du cache (16) à la paroi de carter (6), ou
- la branche intérieure (9) respective et le cache (16) sont fixés ensemble à la paroi de carter (6).

4. Composant selon l'une des revendications 1 à 3, **caractérisé en ce que** le cache (16) s'appuie par sa surface contre la branche intérieure (9) respective.

5. Composant selon l'une des revendications 1 à 4, **caractérisé en ce que** la paroi de carter (6) comporte une bosse (17) dépassant vers l'extérieur qui est adjacente au trou de passage (7) pour la branche intérieure (9) respective et dans laquelle la branche intérieure (9) respective s'appuie par sa surface contre la paroi de carter (6), la profondeur de la bosse (17) pouvant notamment correspondre globalement à l'épaisseur de la branche intérieure (9) respective.

6. Composant selon l'une des revendications 1 à 5, **caractérisé en ce que** l'attache (3) respective comporte en plus de l'agrafe (8) respective au moins un élément de renfort (18) comportant une branche d'appui (19), qui s'étend parallèlement à la branche extérieure (10) de l'agrafe (8) respective et qui s'appuie par sa surface contre celle-ci, et une branche de serrage (20), qui s'étend parallèlement à la branche intérieure (9) de l'agrafe (8) respective et qui s'appuie de l'extérieur par sa surface contre la paroi de carter (6), l'élément de renfort (18) respectif et l'agrafe (8) respective étant fixés en position l'un par rapport à l'autre.

7. Composant selon l'une des revendications 1 à 6, **caractérisé en ce que** l'attache (3) respective comporte deux agrafes (8) de ce type, dont les branches intérieures (9) s'écartent à l'opposé des branches extérieures (10) adjacentes l'une à l'autre par leur surface, les branches extérieures (10) des deux agrafes (8) pouvant notamment être fixées l'une à l'autre.

8. Composant au moins selon la revendication 6, **caractérisé en ce que** l'attache (3) respective comporte deux éléments de renfort (18) de ce type, dont les branches de serrage (20) s'écartent à l'opposé des branches d'appui (19), les deux éléments de renfort (18) pouvant notamment former un patin de renfort (22) qui peut être placé sur la branche extérieure (10) de l'agrafe (8) ou sur les deux branches extérieures (10) des deux agrafes (8).

9. Composant selon l'une des revendications 1 à 8, **caractérisé en ce que** le composant (1) est un dispositif de traitement de gaz d'échappement qui comprend au moins un élément du groupe suivant : silencieux, convertisseur catalytique, filtre à particules, installation de réduction catalytique sélective (RCS).
